# EUROPEAN PATENT SPECIFICATION

(11) **EP 0 581 371 B1**
(45) Date of publication and mention of the grant of the patent: **22.10.1997**
(21) Application number: 93202145.4
(22) Date of filing: 22.07.1993
(51) Int. Cl.: H04N 5/93, H04N 5/92

(54) **Device for the displaying of television frames in the reverse play mode**
Einrichtung zur Rückwärtswiedergabe von Fernsehbildern
Dispositif pour visualiser des images de télévision dans un mode de régression

(30) Priority: 30.07.1992 EP 92202367
(43) Date of publication of application: 02.02.1994
(73) Proprietor: Philips Electronics N.V., 5621 BA Eindhoven (NL)
(72) Inventor: Beuker, Rob Anne, c/o INT. OCTROOIBUREAU B.V., NL-5656 AA Eindhoven (NL); Shah, Imran Ali, c/o INT. OCTROOIBUREAU B.V., NL-5656 AA Eindhoven (NL)
(74) Representative: Kooiman, Josephus Johannes Antonius

(56) References cited:
- US-A- 4 918 524

## Description

The invention relates to a device for displaying a television frame in the reverse play mode. Such a device is used in video players having a reverse play facility. The invention also relates to a video player comprising such a device. Such a player may be, for example a video recorder or a CD video player.

Video players generally have a reverse play facility with which the recorded video scene is displayed in reverse. In the current video recorders the frame signal is recorded as a succession of fields which pairwise form an interlaced frame. These types of apparatus are referred to as "field-based" video recorders. In the reverse play mode of such field-based video recorders the fields are read and displayed in the reverse order.

For a novel generation of digital video recorders, storage and signal processing of complete interlaced frames of the frame signal are considered. These "frame-based" video recorders necessarily comprise a circuit for successively displaying the even and the odd field of each interlaced frame. In the reverse play mode, in which the frames are read from the tape in the reverse order, the two fields of each frame should be displayed in the reverse order. In fact, the two fields of a frame are obtained at different instants. If their order were not reversed, the frame signal would be subject to motion artefacts. Moving pictures would not be displayed smoothly but jerkily.

It is an object of the invention to provide a device with which the direction of motion within an interlaced television frame is reversed.

To this end the device according to the invention comprises means for splitting the interlaced frame signal into a spatial signal comprising the lowest vertical frame frequencies and a motion auxiliary signal comprising the highest vertical frame frequencies, and means for subtracting the motion auxiliary signal from the spatial signal. Reverse play is now found to be realised smoothly and without any noticeable motion artefacts. The device has a simple construction and the sequence of displaying the fields of each frame is the same as in the case of forward play.

The split-up of an interlaced frame signal into a spatial signal and a motion auxiliary signal has been previously proposed in the non-prepublished European Patent Application EP-A- 0 520 546 (published on 30.12.92). It has been explained in this Application that the spatial signal represents the spatial picture contents and that addition of the motion auxiliary signal to this frame reconstructs the motion in the frame. It has been found that subtraction of the motion auxiliary signal from the spatial signal causes a reversal of the direction of motion. Said Patent Application also states that the two signals combined need not comprise the full vertical frequency spectrum. The bandwidth of the spatial signal closely relates to the desired frame resolution and a narrow-band motion auxiliary signal is sufficient for reconstructing the motion. This also applies to the reversal of motion for reverse play.

The means for splitting the interlaced frame signal into a spatial signal and a motion auxiliary signal may be constituted by a vertical low-pass filter and a vertical high-pass filter, respectively. However, the invention is notably suitable in situations where the frame signal has already been split before recording. The spatial signal and the motion auxiliary signal have then been recorded separately. Upon display, they only need to be separated, for example by means of a demultiplex circuit.

Fig. 1 shows diagrammatically a device according to the invention.

Fig. 2 shows an embodiment of filters shown in Fig. 1.

Fig. 3 shows some diagrams to explain the device of Fig. 1.

Fig. 4 shows a video recorder provided with a device according to the invention.

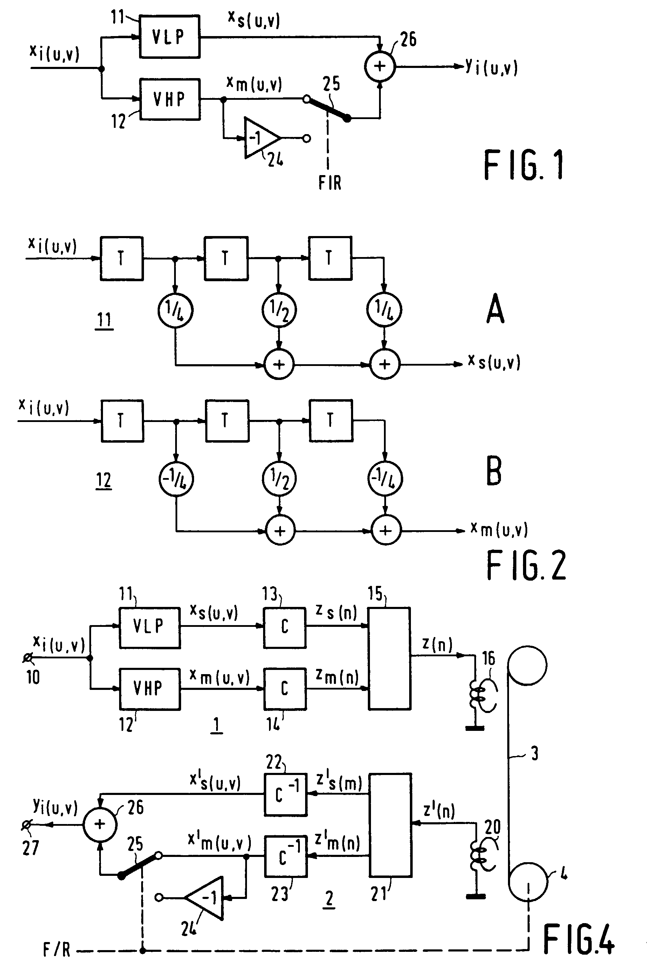

Fig. 1 shows diagrammatically a device according to the invention. The device comprises a vertical low-pass filter 11 and a vertical high-pass filter 12. An interlaced frame signal in the form of digital frame samples xᵢ(u,v) is applied to the device. The low-pas filter 11 supplies a spatial signal xₛ(u,v). The high-pass filter 12 supplies a motion auxiliary signal xₘ(u,v). The motion auxiliary signal xₘ(u,v) is applied to a selector switch 25, either directly or *via* an inverter 24. Dependent on the position of the selector switch 25, the direct motion auxiliary signal xₘ(u,v) or the inverted motion auxiliary signal -xₘ(u,v) is added to the spatial signal xₛ(u,v) in an adder circuit 26. The adder circuit 26 supplies an interlaced output signal yᵢ(u,v). The selector switch 25 is controlled by a forward/reverse operating signal F/R. For normal forward play the selector switch is in the position shown. The motion auxiliary signal xₘ(u,v) and the spatial signal xₛ(u,v) are then added together. In the reverse play mode the selector switch is in the other position. In this mode the motion auxiliary signal xₘ(u,v) is subtracted from the spatial signal xₛ(u,v).

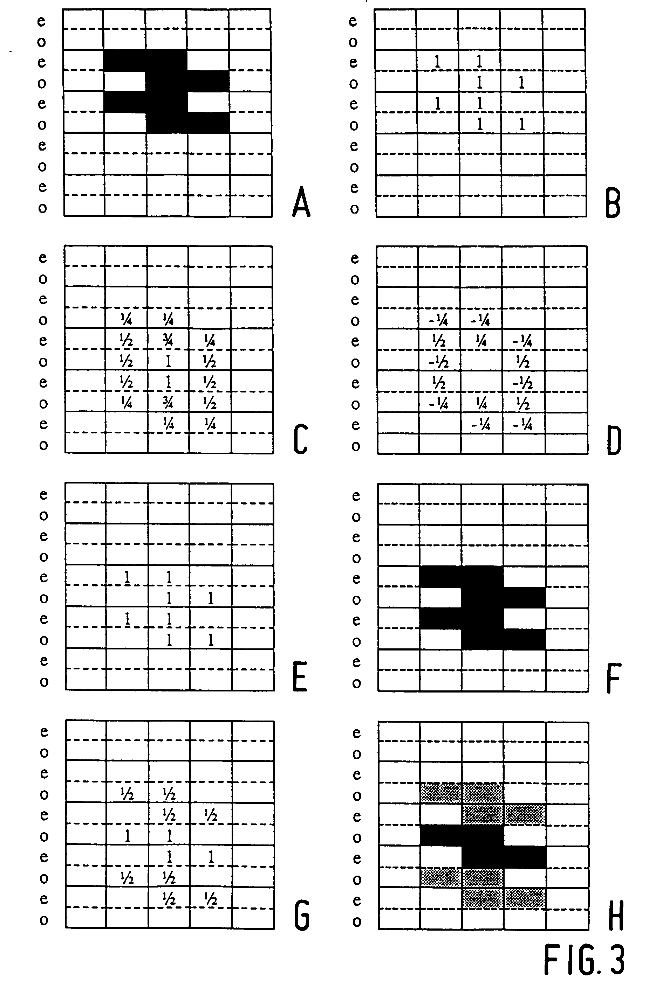

The device shown in Fig. 1 will be described with reference to an input signal having the shape of a rectangular frame area of 2 pixels wide and 4 TV lines high. The rectangle moves to the right at a rate of one pixel period per field. In Fig. 3A this interlaced frame is shown graphically. Due to the motion the pixels in the second, odd field are moved to the right over one sample period. Fig. 3B shows the pixel values xᵢ(u,v) corresponding to the frame. The pixels constituting the frame area have the value of 1 and the pixels constituting the background have the value of 0 (not shown).

As described in Patent Application EP 0 520 546, the interlaced input signal can be considered as the sum of a baseband component having a spectrum around the vertical frequency ω_{y} = 0 and an alias component around the vertical frequency ω_{y} = π. Here, ω_{y} = π is the highest vertical frequency, or half the sample frequency. The low-pass filter 11 (see Fig. 1) filters the baseband component from the input signal and supplies the spatial frame signal xₛ(u,v) which represents the spatial contents of the frame. The high-pass filter 12 (see Fig. 1) filters the alias component from the input signal and supplies the motion auxiliary signal or "motion helper" xₘ(u,v) which is representative of the motion in the frame signal. If desired, the motion auxiliary signal may have a narrow band.

It will hereinafter be further assumed that the filters shown in Fig. 2 are used in the device shown in Fig. 1. The vertical low-pass filter 11 (see Fig. 2A) with filter coefficients 1/4, 1/2 and 1/4 has a cut-off frequency ω_{y} = 1/2π. The vertical high-pass filter 12 (see Fig. 2B) has filter coefficients -1/4, 1/2 and -1/4 and also has a limit frequency ω_{y} = 1/2π. For these filters, Fig. 3C shows the pixel values of the spatial signal xₛ(u,v) and Fig. 3D shows the pixel values of the motion auxiliary signal xₘ(u,v).

In the case of forward play, the motion auxiliary signal xₘ(u,v) is added to the spatial signal xₛ(u,v). The pixel values of the output signal yᵢ(u,v) are shown in Fig. 3E. They have been obtained by adding the pixel values in Fig. 3C and Fig. 3D together. In Fig. 3F the obtained interlaced frame is shown graphically. As is apparent therefrom, the rectangle is displayed correctly. Due to the delay in the filters the rectangle is shifted only slightly downwards. Assuming that first the even field and subsequently the odd field of each frame is displayed, it appears from Fig. 3F that the frame area moves to the right. This is in full conformity with the original video scene.

In the case of reverse play, the motion auxiliary signal xₘ(u,v) is subtracted from the spatial signal xₛ(u,v). The pixel values of the output signal yᵢ(u,v) are shown in Fig. 3G. Now they have been obtained by subtracting the pixel values in Fig. 3D from the corresponding pixel values in Fig. 3C. Fig. 3H shows the interlaced frame graphically. With an unchanged sequence of displaying the fields (first the even field, then the odd field), it appears from Fig. 3H that the odd field has shifted to the left over one sample period. Consequently, the frame area now moves in the opposite direction.

As is further apparent from Fig. 3H, the resolution of the frame upon reverse play is slightly reduced in the example considered. This is caused by the following fact. For the sake of simplicity of the example, a frame area having extremely steep vertical transitions has been chosen as an input signal. Consequently the spectra of the baseband component and the alias component overlap each other for the greater part and an unambiguous split-up of the components is not possible. Moreover, also for the sake of simplicity, two non-optimal filters are used. In practical situations the reverse frame signal is not subject to degradation of the frame quality.

Fig. 4 shows diagrammatically a video recorder including a device according to the invention. In this Figure elements having the same reference numerals denote the same components as in Fig. 1. The video recorder comprises a recording section and a playback section 2. Both sections are coupled to a storage medium 3, for example a magnetic tape. The tape 3 is transported by means of a transport device 4.

The interlaced frame signal xᵢ(u,v) is applied to an input 10 of the recording section. The interlaced frame signal is applied to the vertical low-pass filter 11 and the vertical high-pass filter 12. The spatial signal xₛ(u,v) and the motion auxiliary signal xₘ(u,v) are subjected in respective coding circuits 13 and 14 to some coding operation and converted into digital bit streams zₛ(n) and zₘ(n), respectively. The bit streams are applied to a multiplexer 15 which applies a resultant channel bit stream z(n) to a recording head 16.

A reproducing head 20 reads the recorded signal. The channel bit stream z'(n) which has been read is split into digital bit streams z'ₛ(n) and z'ₘ(n) in a demultiplexer 21. Decoding circuits 22 and 23 perform decoding operations which are inverse to the coding operations performed by the coding circuits 13 and 14. Thus, upon play-back, the spatial signal x'ₛ(u,v) and the motion auxiliary signal x'ₘ(u,v) are regained. They are applied in a manner already described to the inverter 24, the selector switch 25 and the adder circuit 26. The adder circuit 26 applies the interlaced output signal yᵢ(u,v) to an output 27 of the video recorder. The selector switch 25 is controlled by a forward/reverse operating signal F/R which also controls the transport device 4. In the normal forward direction of the tape the selector switch 25 is in the position shown. In the reverse play mode of the video recorder the tape direction is reversed and the selector switch 25 is in the other position.

## Claims

1. A device for displaying a television frame in the reverse play mode, characterized in that the device comprises means (11, 12; 21) for splitting an interlaced frame signal into a spatial signal comprising the lowest vertical frame frequencies and a motion auxiliary signal comprising the highest vertical frame frequencies, and means (24, 26) for subtracting the motion auxiliary signal from the spatial signal.

2. A device as claimed in Claim 1, characterized in that the means for splitting the interlaced frame signal into the spatial signal and the motion auxiliary signal are constituted by a vertical low-pass filter (11) and a vertical high-pass filter (12), respectively.

3. A device as claimed in Claim 1, characterized in that the means for splitting the interlaced frame signal are constituted by separating means (21) for separating a recorded spatial signal and a motion auxiliary signal.

4. A video player provided with a device as claimed in any one of the preceding Claims.

## Patentansprüche

1. Anordnung zur Rückwärtswiedergabe eines Fernsehbildes, dadurch gekennzeichnet, daß sie mit Mitteln (11, 12; 21) versehen ist um ein zeilenversprungenes Bildsignal aufzuteilen, und zwar in ein räumliches Signal, das die niedrigsten Vertikal-Bildfrequenzen umfaßt und ein Bewegungshilfssignal, das die höchsten Vertikal-Bildfrequenzen umfaßt, und mit Mitteln (24, 26), um bei Rückwärtsbildwiedergabe das Bewegungshilfssignal von dem räumlichen Signal zu subtrahieren.

2. Anordnung nach Anspruch 1, dadurch gekennzeichnet, daß die Mittel zum Aufteilen des zeilenversprungenen Bildsignals in das räumliche Signal und das Bewegungshilfssignal durch ein Vertikal-Tiefpaßfilter (11) bzw. ein Vertikal-Hochpaßfilter (12) gebildet werden.

3. Anordnung nach Anspruch 1, dadurch gekennzeichnet, daß die Mittel zum Aufteilen des zeilenversprungenen Bildsignals durch Trennmittel (21) zum Trennen eines aufgezeichneten räumlichen Signals und eines Bewegungshilfssignals gebildet werden.

4. Videospieler mit einer Anordnung nach einem der vorstehenden Ansprüche.

## Revendications

1. Dispositif destiné à afficher une image de télévision dans le mode de lecture arrière, caractérisé en ce que le dispositif comprend des moyens (11, 12; 21) pour décomposer un signal d'image entrelacée en un signal spatial comprenant les plus basses fréquences d'image verticales et un signal auxiliaire de mouvement comprenant les plus hautes fréquences d'image verticales, et des moyens (24, 26) pour soustraire le signal auxiliaire de mouvement du signal spatial.

2. Dispositif suivant la revendication 1, caractérisé en ce que les moyens destinés à décomposer le signal d'image entrelacée en signal spatial et signal auxiliaire de mouvement sont constitués par un filtre passe-bas vertical (11) et un filtre passe-haut vertical (12), respectivement.

3. Dispositif suivant la revendication 1, caractérisé en ce que les moyens destinés à décomposer le signal d'image entrelacée sont constitués par un moyen séparateur (21) destiné à séparer un signal spatial enregistré et un signal auxiliaire de mouvement.

4. Appareil de lecture vidéo équipé d'un dispositif suivant l'une quelconque des revendications précédentes.
